(19) Europäisches Patentamt
European Patent Office
Office européen des brevets

(11) **EP 3 036 808 B1**

(12) **EUROPÄISCHE PATENTSCHRIFT**

(45) Veröffentlichungstag und Bekanntmachung des Hinweises auf die Patenterteilung:
**09.03.2022  Patentblatt 2022/10**

(21) Anmeldenummer: **13765307.7**

(22) Anmeldetag: **10.09.2013**

(51) Internationale Patentklassifikation (IPC):
**H02H 3/30** (2006.01)    **H02H 7/26** (2006.01)

(52) Gemeinsame Patentklassifikation (CPC):
**H02H 3/305; H02H 7/263**

(86) Internationale Anmeldenummer:
**PCT/EP2013/068680**

(87) Internationale Veröffentlichungsnummer:
**WO 2015/036007 (19.03.2015 Gazette 2015/11)**

(54) **DIFFERENTIALSCHUTZVERFAHREN UND DIFFERENTIALSCHUTZEINRICHTUNG**

DIFFERENTIAL PROTECTION METHOD AND DIFFERENTIAL PROTECTION DEVICE

PROCÉDÉ ET SYSTÈME DE PROTECTION DIFFÉRENTIELLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.06.2016  Patentblatt 2016/26**

(73) Patentinhaber: **Siemens Aktiengesellschaft 80333 München (DE)**

(72) Erfinder:
• **HEINE, Holger
  26607 Aurich (DE)**
• **SCHUSTER, Norbert
  26789 Leer (DE)**

(56) Entgegenhaltungen:
WO-A1-2010/127431     US-A1- 2003 212 473
US-A1- 2011 063 766

## Beschreibung

Die Erfindung bezieht sich auf ein Differentialschutzverfahren zum Erzeugen eines Fehlersignals, das einen Fehler hinsichtlich einer Primärkomponente eines elektrischen Energieversorgungsnetzes angibt, bei dem mittels Messeinrichtungen an mindestens zwei unterschiedlichen Messstellen der Primärkomponente des elektrischen Energieversorgungsnetzes jeweils Strommesswerte erfasst werden, die Strommesswerte an eine Differentialschutzeinrichtung übermittelt werden, die mit zueinander gehörenden Strommesswerten aller Messeinrichtungen durch vorzeichenrichtige Addition einen Differenzstromwert bildet, und mittels der Differentialschutzeinrichtung das Fehlersignal erzeugt wird, wenn der Differenzstromwert einen vorgegebenen Schwellenwert überschreitet.

Die Erfindung bezieht sich auch auf eine Differentialschutzeinrichtung zur Durchführung eines Differentialschutzverfahrens.

Differentialschutzeinrichtungen werden zur Überwachung verschiedener Primärkomponenten elektrischer Energieversorgungsnetze, beispielsweise Leitungen, Kabel, Sammelschienen und Transformatoren, eingesetzt. Dabei wird an mindestens zwei unterschiedlichen Messstellen der überwachten Primärkomponente der an den Messstellen fließende Strom erfasst und der Differentialschutzeinrichtung zugeführt. Die Differentialschutzeinrichtung bildet durch vorzeichenrichtige Addition aus den Strommesswerten Differenzstromwerte, die zur Beurteilung der Betriebssituation der überwachten Primärkomponente herangezogen werden. Im fehlerfreien Fall liegen die Differenzstromwerte nämlich in einem Bereich nahe Null, da hierbei - vereinfacht gesprochen - der in die Komponente hinein fließende Strom vollständig auch wieder aus ihr heraus fließt. Ergeben sich hingegen Differenzstromwerte, die einen von Null verschiedenen Schwellenwert überschreiten, so lassen diese auf einen fehlerbehafteten Betriebszustand, z.B. einen internen Kurzschluss, schließen. In diesem Fall muss der vorliegende Fehlerstrom durch Öffnen von die Primärkomponente begrenzenden Schalteinrichtungen, z.B. Leistungsschaltern, unterbrochen werden. Hierfür erzeugt die Differentialschutzeinrichtung ein entsprechendes Fehlersignal, das die Schalteinrichtung zum Öffnen ihrer Schaltkontakte veranlasst.

Bei einer Primärkomponente mit weit auseinander liegenden Enden, beispielsweise einer Leitung von mehreren Kilometern Länge, müssen die Strommesswerte beispielsweise über eine längere Strecke übertragen werden. In einem solchen Fall ist üblicherweise an jedem der Enden der Primärkomponente eine separate Differentialschutzeinrichtung angeordnet, die den jeweiligen Differenzstromwert aus den eigenen (lokal erfassten) Strommesswerten und den vom anderen Ende der Primärkomponente empfangenen Strommesswerten bildet. Bei einer Primärkomponente mit mehreren Enden, z.B. einer verzweigten Leitung, sind zudem Strommesswerte von jedem der Enden erforderlich, um das Differentialschutzverfahren korrekt durchführen zu können. Dazu müssen die an den jeweiligen Messstellen lokal erfassten Strommesswerte zwischen den einzelnen Differentialschutzgeräten übertragen werden.

Zur Beurteilung der Betriebssituation der Primärkomponente sind somit Strommesswerte von zumindest zwei unterschiedlichen Messstellen an den jeweiligen Enden der überwachten Primärkomponente erforderlich. Bei bestehenden Differentialschutzsystemen werden die Messwerte häufig über eine festverdrahtete Punkt-zu-Punkt-Verbindung (z.B. Glasfaserleitungen) übertragen, wodurch eine deterministische Übertragung erreicht wird, d.h., die Übertragungszeit der Messwerte ist hauptsächlich abhängig von der Übertragungsstrecke und der Übertragungsart sowie im Wesentlichen konstant.

Aus der deutschen Offenlegungsschrift DE 23 39 931 A1 ist beispielsweise ein Differentialschutzsystem bekannt, bei dem die Strommesswerte in Form analoger Stromsignale über elektrische Verbindungsleitungen zu einer Differentialschutzeinrichtung übertragen werden. Die Bildung des Differenzstromwertes erfolgt über einen Strommesswandler, dem die Strommesswerte in geeigneter Form zugeführt werden. Aus der europäischen Patentschrift EP 1 071 961 B1 ist zudem ein Differentialschutzverfahren für eine mehrere Enden aufweisende Leitung bekannt, bei dem die Strommesswerte zwischen an den jeweiligen Messstellen angeordneten Differentialschutzgeräten über Datenleitungen übertragen werden.

Aus der US 2011/063766 A1 ist schließlich ein Differentialschutzverfahren bekannt, bei dem zwischen externer und kanalbasierter Synchronisation der Uhren in den Differentialschutzgeräten umgeschaltet werden kann.

Bei jüngeren Differentialschutzsystemen geht man mittlerweile dazu über, die Strommesswerte anstelle über eine Festverdrahtung über ein Kommunikationsnetzwerk zu übertragen. Dies hat den Vorteil einer kostengünstigeren Kommunikationsinfrastruktur. Außerdem sind Kommunikationsnetzwerke oftmals bereits in der Nähe elektrischer Primärkomponenten, z.B. zwischen sogenannten Unterstationen eines Energieversorgungsnetzes, vorhanden und können ohne zusätzliche Kosten für die Übermittlung der Strommesswerte genutzt werden.

Durch die Nutzung von Kommunikationsnetzwerken zur Übertragung der Strommesswerte verliert man hingegen oftmals den Vorteil der deterministischen Übertragungszeit, so dass ein Problem hinsichtlich der Zuordnung der jeweils zusammengehörenden Strommesswerte entsteht. Dabei müssen die lokalen und die empfangenen Messwerte nämlich derart zeitlich angeglichen werden, dass bei der Differenzwertbildung jeweils die zu demselben Zeitpunkt erfassten Messwerte miteinander verglichen werden. Wenn - wie in einem deterministischen Kommunikationssystem möglich - beispielsweise die jeweilige Übertragungszeit der Strommesswerte bekannt ist, kann der jeweilige Zeitpunkt der Messwerterfassung durch Differenzbildung zwischen dem Empfangszeitpunkt der Messdaten im lokalen Differentialschutzgerät und der bekannten Übertragungszeit ermittelt werden. Bei nichtdeterministischen Kommunikationssystemen - beispielsweise Ethernet-Netzwerken - ergeben sich hingegen beispielsweise Probleme, weil die Übertragungszeit nicht konstant ist oder Unterschiede der Übertragungszeit in Hin- und Rückrichtung auftreten.

Durch solche Unsicherheiten bei der zeitlichen Angleichung der jeweiligen Strommesswerte kann eine Überfunktion der Differentialschutzeinrichtung herbeigeführt werden, da bei der vorzeichenrichtigen Addition nicht zusammengehörender Messwerte ein Differenzstromwert gebildet wird, der einen Fehler hinsichtlich der Primärkomponente vorgibt, der tatsächlich jedoch gar nicht vorhanden ist. Hieraus können Fehlauslösungen resultieren, die den ordnungsgemäßen Betrieb des Energieversorgungsnetzes beeinträchtigen.

Abhilfe könnte beispielsweise dadurch geschaffen werden, dass die internen Zeitgeber der Messeinrichtungen und der Differentialschutzeinrichtung über ein externes Zeitgebersystem, z.B. durch das im GPS-Signal enthaltene Zeitsignal, aufeinander synchronisiert werden. Hierzu sind jedoch spezielle Empfangssysteme, z.B. GPS-Empfänger, notwendig, die sich erhöhend auf den Gerätepreis auswirken.

Der Erfindung liegt die Aufgabe zugrunde, eine möglichst kostengünstige Möglichkeit anzugeben, mit der ein Differentialschutzverfahren auch bei Übertragung der Strommesswerte über ein nichtdeterministisches Kommunikationsnetzwerk möglichst zuverlässig durchgeführt werden kann.

Zur Lösung dieser Aufgabe wird ein Verfahren der eingangs genannten Art derart fortgebildet, dass der Strommesswert zumindest einer Messeinrichtung über ein Kommunikationsnetz an die Differentialschutzeinrichtung übertragen wird, wobei das Kommunikationsnetzwerk Netzwerkknoten umfasst, die dazu eingerichtet sind, Nachrichten hoher Priorität bevorzugt gegenüber Nachrichten niedriger Priorität zu versenden, und wobei der Strommesswert als Nachricht hoher Priorität übertragen wird. Es wird eine Jitter-Kenngröße ermittelt, die eine maximal mögliche Übertragungszeit der den Strommesswert enthaltenden Nachricht angibt, und die Differentialschutzeinrichtung leitet den Wert des Schwellenwertes in Abhängigkeit von der Jitter-Kenngröße ab.

Zunächst liegt der Erfindung die Erkenntnis zugrunde, dass eine unterschiedliche Übertragungszeit in einem Kommunikationsnetzwerk zwischen einem Sender und einem Empfänger insbesondere durch den Datenverkehr hochpriorer Nachrichten blockierende niederpriore Nachrichten erfolgt. Selbst wenn nämlich ein Kommunikationsnetzwerk verwendet wird, das einen Steuerungsmechanismus (beispielsweise den sogenannten "QoS"-Quality of Service) umfasst, mit dem die Übermittlung höherpriorer Nachrichten der Übermittlung niederpriorer Nachrichten vorgezogen werden soll, unterbricht üblicherweise eine Nachricht hoher Priorität nicht den Sendevorgang einer niederprioren Nachricht, sondern wird lediglich in der Sendequeue (also der "Warteschlange" zu versendender Nachrichten) an die vorderste Stelle gesetzt. Hierdurch kann ein sogenannter "Jitter" hervorgerufen werden, also eine variable Übertragungszeit von den Strommesswert enthaltenden Nachrichten, selbst wenn diese über dieselbe physikalische Übertragungsstrecke im Netzwerk übertragen werden.

Der Erfindung schlägt in diesem Zusammenhang vor, die Empfindlichkeit der Fehlererkennung durch die Differentialschutzeinrichtung an ein Maß der Unsicherheit bezüglich der Übertragungszeit der Nachricht mit dem Strommesswert anzupassen. Auf diese Weise kann insbesondere die Empfindlichkeit der Fehlererkennung herabgesetzt werden, wenn eine hohe Unsicherheit bezüglich der Übertragungszeit der Nachricht, d.h. ein großer Bereich, in dem die Übertragungszeit schwanken kann, besteht. Auf der anderen Seite kann die Empfindlichkeit der Fehlererkennung erhöht werden, sofern die Übertragungszeit keinen oder nur geringen Schwankungen ausgesetzt ist. Auf diese Weise können Unterschiede in der Übertragungszeit durch eine entsprechend angepasste Einstellung der Empfindlichkeit der Fehlererkennung, also durch Anpassung des Schwellenwertes, kompensiert werden.

Das Maß der Unsicherheit der Übertragungszeit wird erfindungsgemäß über die Jitter-Kenngröße angegeben, die die maximal mögliche Übertragungszeit der Nachricht angibt.

Zur Art und Weise der Anpassung des Schwellenwertes kann insbesondere folgende Überlegung zugrunde gelegt werden: Idealerweise liegen die (idealerweise sinusförmigen) Kurven zeitlich exakt aneinander angepasster Verläufe der Strommesswerte der einzelnen Messstellen direkt übereinander, so dass sich durch Differenzbildung jeweils der Wert Null ergibt. Durch die Zeitverzögerung bei der Übertragung der Nachricht verschieben sich nun die Kurven entlang der Zeitachse gegeneinander, so dass die Kurven nicht mehr exakt übereinander liegen und eine Abweichung entsteht, die allein auf die Übertragungsdauer der Nachricht zurückzuführen ist. Eine ermittelte maximale Übertragungsdauer kann also direkt in eine Verschiebung der Kurven gegeneinander umgesetzt werden. Hieraus ergibt sich in entsprechender Weise eine Abweichung der Werte entlang der Stromachse, so dass der durch die zeitliche Verschiebung der Kurven entstehende Ablesefehler direkt ermittelt werden kann. Der Schwellenwert sollte folglich derart gewählt werden, dass die durch die zeitliche Verschiebung der Kurven entstehende Abweichung der Stromwerte hinsichtlich der Fehlererkennung berücksichtigt wird.

Oftmals sind die Messeinrichtung und die Differentialschutzeinrichtung in einem gemeinsamen Differentialschutzgerät zusammengefasst. In diesem Fall wird die Jitter-Kenngröße für diejenigen Nachrichten ermittelt, die über das Kommunikationsnetz von der Messeinrichtung des einen Differentialschutzgerätes an die Differentialschutzeinrichtung eines anderen Differentialschutzgerätes übertragen werden, während für die geräteinterne Übermittlung der lokalen Strommesswerte von der Messeinrichtung eines Differentialschutzgerätes an dessen Differentialschutzeinrichtung die Übertragungszeit als vernachlässigbar und zudem konstant angesehen wird. Es besteht jedoch auch die Möglichkeit, an den Messstellen lediglich Messeinrichtungen (z.B. Zeigermessgeräte, sogenannte "Phasor Measurement Units") vorzusehen, die ihre Messwerte an eine zentrale Differentialschutzeinrichtung senden.

Eine vorteilhafte Ausführungsform des erfindungsgemäßen Verfahrens sieht vor, dass zur Überprüfung, ob der Differenzstromwert den vorgegebenen Schwellenwert überschreitet, aus den Strommesswerten der einzelnen Messstellen auch Stabilisierungswerte gebildet werden und im Rahmen einer Auslösebereichsprüfung überprüft wird, ob ein unter Heranziehung eines Differenzstromwertes und eines jeweils zugehörigen Stabilisierungswertes gebildetes Messwertpaar in einem vorgegebenen Auslösebereich liegt, und eine Überschreitung des Schwellenwertes erkannt wird, wenn das Messwertpaar innerhalb des Auslösebereichs liegt.

Da in der Praxis nämlich keine idealen Verhältnisse vorliegen und der Differenzstromwert auch im fehlerfreien Fall üblicherweise nicht genau den Wert Null annimmt, bietet es sich an, für den Differenzstromwert einen geeigneten Vergleichswert als Schwellenwert zu verwenden. Zu diesem Zweck wird der sogenannte Stabilisierungswert herangezogen, der sich je nach Primärkomponente unterschiedlich berechnet. Beispielsweise ergibt sich beim Leitungsdifferentialschutz der Stabilisierungswert als Summe der Beträge der Strommesswerte an den jeweiligen Leitungsenden. Die Verwendung eines Stabilisierungswertes beim Differentialschutz ist an sich bekannt. Trägt man einen Differenzstromwert und einen zugehörigen Stabilisierungswert in einem Auslösediagramm auf, das zusätzlich eine Kennlinie aufweist, die einen Auslösebereich von einem Normalbereich trennt, so liegt das jeweilige Messwertpaar entweder innerhalb oder außerhalb des durch die Kennlinie festgelegten Auslösebereichs. Auf diese Weise kann durch Auswertung der Lage des Messwertpaares eine Entscheidung bzgl. der Bildung des Fehlersignals getroffen werden: das Fehlersignal wird dann erzeugt, wenn das Messwertpaar innerhalb des vorgegebenen Auslösebereichs liegt. In diesem Fall stellt die Kennlinie einen Schwellenwert dar, dessen Wert in Abhängigkeit vom Stabilisierungswert definiert ist.

Gemäß einer weiteren vorteilhaften Ausführungsform des erfindungsgemäßen Verfahrens ist vorgesehen, dass der Wert des Schwellenwertes mit steigendem Wert der Jitter-Kenngröße zunimmt.

Hierdurch wird erreicht, dass die Empfindlichkeit der Fehlererkennung herabgesetzt wird, wenn eine hohe Unsicherheit bezüglich der Übertragungszeit der Nachricht besteht. Auf der anderen Seite kann so die Empfindlichkeit der Fehlererkennung erhöht werden, sofern die Übertragungszeit keinen oder nur geringen Schwankungen ausgesetzt ist.

Bei der Verwendung eines einfachen Schwellenwertes kann dessen Wert in einfacher Weise in Abhängigkeit von der Jitter-Kenngröße angepasst werden. Bei der oben beschriebenen Ausführungsform hinsichtlich der Auslösebereichsprüfung, bei der der Schwellenwert nicht aus einem einzelnen Wert besteht, kann die Festlegung des Schwellenwertes entweder durch Anpassung der Kennlinie im Auslösediagramm erfolgen oder durch eine veränderte Berechnung des Stabilisierungswertes - z.B. durch einen variablen Vorfaktor - bei gleichbleibender Kennlinie.

Hinsichtlich des Schwellenwertes kann entweder in nicht erfindungsgemäßer Weise vorgesehen sein, dass die Jitter-Kenngröße, beispielsweise bei der Inbetriebnahme des Differentialschutzsystems und ggf. auch bei signifikanten Änderungen, ermittelt und dem Inbetriebnahmepersonal der Differentialschutzeinrichtung angezeigt wird, so dass der Wert des Schwellenwertes als Parameter händisch in die Konfiguration des Gerätes übernommen werden kann. Es besteht jedoch gemäß der Erfindung auch die Möglichkeit einer automatischen Parameterübernahme; hierbei wird der Differentialschutzeinrichtung die Jitter-Kenngröße zur Verfügung gestellt, aus der die Differentialschutzeinrichtung dann einen Wert für den Schwellenwert ableitet.

Insbesondere bei einer automatischen Übernahme des Schwellenwertes in die Differentialschutzeinrichtung kann gemäß einer alternativen Ausführungsform des erfindungsgemäßen Verfahrens auch vorgesehen sein, dass die Ermittlung der Jitter-Kenngröße wiederholt durchgeführt wird und die Festlegung des Schwellenwertes dynamisch in Abhängigkeit des jeweils ermittelten Wertes der Jitter-Kenngröße erfolgt.

Hierbei kann auch bei sich veränderndem Übertragungsverhalten des Kommunikationsnetzes, z.B. bei einer Topologieänderung, einem Austausch eines Netzknotens oder einer Bandbreitenerhöhung, automatisch eine Nachführung des Schwelenwertes erfolgen, ohne dass manuell dazu Eingriffe notwendig wären.

Eine weitere vorteilhafte Ausführungsform des erfindungsgemäßen Verfahrens sieht vor, dass zur Ermittlung der Jitter-Kenngröße diejenigen Netzwerknoten ermittelt werden, die entlang des Pfades der den Strommesswert enthaltenden Nachricht zwischen der Messeinrichtung und der Differentialschutzeinrichtung liegen, eine maximale Aufenthaltsdauer der Nachricht in dem jeweiligen Netzwerkknoten ermittelt wird und die maximale Übertragungszeit der Nachricht als Summe der maximalen Aufenthaltsdauern der Nachricht an allen ermittelten Netzwerkknoten bestimmt wird.

Auf diese Weise wird die maximale Übertragungszeit auf die "Wartezeit" bzw. Aufenthaltsdauer der hochprioren Nachrichten mit den Strommesswerten an den einzelnen Netzwerkknoten zurückgeführt. Diese jeweilige Aufenthaltsdauer entsteht wie bereits erwähnt dadurch, dass sich beim Eintreffen der hochprioren Nachricht bei einem Netzknoten eine niederpriore Nachricht (oder auch eine Nachricht der gleichen hohen Prioritätsstufe) bereits im Sendevorgang befindet und dieser nicht abgebrochen wird. Nach Abschluss des Sendevorgangs der niederprioren Nachricht wird dann von dem Netzknoten die hochpriore Nachricht mit dem Strommesswert versendet. Die durch die Leitungslängen entstehende Übertragungszeit kann hingegen bei der Ermittlung der Jitter-Kenngröße vernachlässigt werden, da diese keinen variablen Anteil besitzt und daher üblicherweise beim die Nachricht empfangenden Differentialschutzgerät ohnehin als feste Zeitverschiebung berücksichtigt wird.

In diesem Zusammenhang kann gemäß einer weiteren vorteilhaften Ausführungsform des erfindungsgemäßen Verfahrens vorgesehen sein, dass die maximale Aufenthaltsdauer einer Nachricht an einem Netzwerkknoten aus der größtmöglichen Nachrichtengröße einer von dem Netzwerkknoten zu versendenden Nachricht und der Übertragungsgeschwindigkeit, mit der eine solche Nachricht von dem Netzwerkknoten versendet wird, ermittelt wird.

Die Informationen über die größtmögliche Nachrichtengröße (auch als Paketgröße oder Framegröße bezeichnet) in Byte und die Übertragungsgeschwindigkeit können beispielsweise unter Einsatz des LLDP (Link Layer Discovery Protocol) ermittelt werden. Dieses Protokoll sieht vor, dass benachbarte Netzknoten untereinander Statusmeldungen austauschen, die unter anderem die benötigten Informationen umfassen. Beispielsweise ist bei Ausbildung des Kommunikationsnetzwerks als ethernetkonformes Netzwerk eine maximale Nachrichtengröße von 1518 Byte üblich. Übliche Übertragungsgeschwindigkeiten liegen beispielsweise bei 100MBit/s oder 1000MBit/s.

Schließlich sieht in diesem Zusammenhang eine weitere vorteilhafte Ausführungsform des erfindungsgemäßen Verfahrens vor, dass zur Ermittlung derjenigen Netzwerkknoten, die entlang des Pfades der den Strommesswert enthaltenden Nachricht zwischen der Messeinrichtung und der Differentialschutzeinrichtung liegen, ein Routen-Optimierungsalgorithmus durchgeführt wird, der zur Lösung eines Traveling-Salesman-Problems geeignet ist.

Solche Optimierungsalgorithmen werden in verschiedenen Bereichen der Softwaretechnik eingesetzt und sind dazu ausgebildet, die kürzestmögliche Verbindung zwischen zwei Wegpunkten unter Berücksichtigung beliebig vieler weiterer dazwischen liegender Wegpunkte zu ermitteln. Im vorliegenden Fall wird durch den Algorithmus somit die kürzeste Verbindung zwischen der Messeinrichtung und der Differentialschutzeinrichtung entlang der Netzknoten des Kommunikationsnetzwerks ermittelt. Entspricht das Netzwerk beispielsweise dem Ethernetstandard, so existiert ohnehin nur eine einzige physikalische bzw. logische Verbindung. Sollten, z.B. aus Redundanzgründen, mehrere Verbindungen zugelassen sein, so müssen alle diese Verbindungen als mögliche Pfade ermittelt werden für die Ermittlung der Jitter-Kenngröße herangezogen werden.

Die oben genannte Aufgabe wird zudem auch durch eine Differentialschutzeinrichtung zum Erzeugen eines Fehlersignals, das einen Fehler hinsichtlich einer Primärkomponente eines elektrischen Energieversorgungsnetzes angibt, gemäß dem Oberbegriff des Anspruchs 8 gelöst. Erfindungsgemäß ist vorgesehen, dass der Strommesswert zumindest einer Messeinrichtung über ein Kommunikationsnetz an die Differentialschutzeinrichtung übertragen wird, wobei das Kommunikationsnetz Netzwerkknoten umfasst, die dazu eingerichtet sind, Nachrichten hoher Priorität bevorzugt gegenüber Nachrichten niedriger Priorität zu versenden, und wobei der Strommesswert als Nachricht hoher Priorität übertragen wird, eine Jitter-Kenngröße ermittelt wird, die eine maximal mögliche Übertragungszeit der den Strommesswert enthaltenden Nachricht angibt, und die Differentialschutzeinrichtung dazu ausgebildet ist, den Wert des Schwellenwertes in Abhängigkeit von der Jitter-Kenngröße abzuleiten.

Hinsichtlich der Vorteile der erfindungsgemäßen Differentialschutzeinrichtung wird auf die zu dem erfindungsgemäßen Verfahren beschriebenen Vorteile verwiesen. Die erfindungsgemäße Differentialschutzeinrichtung ist dazu eingerichtet, jede Ausführungsform des erfindungsgemäßen Verfahrens auszuführen, so dass alles zu dem Verfahren Gesagte auch auf die Differentialschutzeinrichtung bezogen werden kann.

Die Erfindung soll im Folgenden anhand eines Ausführungsbeispiels näher erläutert werden. Hierzu zeigen

Figur 1      eine schematische Ansicht einer von zwei Differentialschutzgeräten überwachten Energieversorgungsleitung eines elektrischen Energieversorgungsnetzes;

Figur 2      eine schematische Ansicht eines von einer Differentialschutzeinrichtung zur Fehlererkennung einsetzbaren Auslösediagramms;

Figur 3      eine schematische Ansicht des zeitlichen Verlaufs zweier Strommesswerte zur Erläuterung der Festlegung des Schwellenwertes; und

Figur 4      eine schematische Ansicht zweier durch ein Kommunikationsnetzwerk verbundener Differentialschutzgeräte.

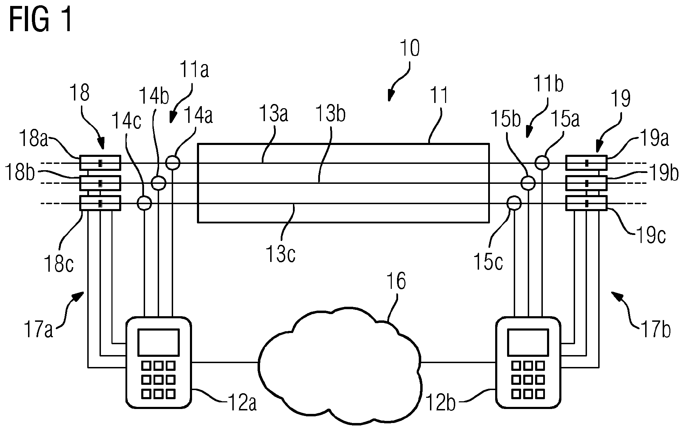

Figur 1 zeigt einen Teil 10 eines im Weiteren nicht näher dargestellten elektrischen Energieversorgungsnetzes. In dem Abschnitt 10 ist eine Primärkomponente 11 angeordnet, bei der es sich beispielsweise um eine dreiphasige elektrische Freileitung des elektrischen Energieversorgungsnetzes handeln kann. Obwohl gemäß Figur 1 eine dreiphasige Primärkomponente 11 mit lediglich zwei Enden 11a bzw. 11b gezeigt ist, kann das nachfolgend beschriebene Verfahren auch bei beliebigen ein- oder mehrphasigen Primärkomponenten mit zwei oder mehr Enden, beispielsweise elektrischen Sammelschienen mit mehreren Abzweigen, eingesetzt werden.

Die Primärkomponente 11 wird an ihrem ersten Ende 11a mittels eines ersten Differentialschutzgerätes 12a und an ihrem zweiten Ende 11b mittels eines zweiten Differentialschutzgerätes 12b überwacht. Hierfür werden für jede Phase 13a, 13b, 13c der Primärkomponente 11 mit ersten Stromwandlern 14a an einer ersten Messstelle an dem ersten Ende 11a der Primärkomponente 11 und zweiten Stromwandlern 15a, 15b und 15c an einer zweiten Messstelle an dem zweiten Ende 11b der Primärkomponente 11 Stromsignale erfasst. Aus den analogen Stromsignalen werden digitale Strommesswerte erzeugt. Die Strommesswerte können beispielsweise als Stromzeigermesswerte ausgebildet sein, die eine Angabe von Amplitude und Phasenwinkel des Stromsignals zum Erfassungszeitpunkt angeben. Die Ermittlung digitaler Strommesswerte kann entweder in den Stromwandlern selbst, in den Differentialschutzgeräten 12a, 12b oder in einem geeigneten separaten Messgerät, z.B. einer Phasor Measurement Unit (PMU), einer Remote Terminal Unit (RTU) oder einer Merging Unit, erfolgen. Zur Erfassung und/oder Bildung der Strommesswerte weisen die Differentialschutzgeräte 12a, 12b in Figur 1 nicht gezeigte Messeinrichtungen auf. Danach werden die erzeugten Strommesswerte einer (in Figur 1 nicht explizit gezeigten) Differentialschutzeinrichtung zugeführt, die bei dem Ausführungsbeispiel gemäß Figur 1 ebenso wie die Messeinrichtung in den jeweiligen Differentialschutzgeräten integriert ist und z.B. eine CPU oder einen Signalprozessor aufweist, und die dazu eingerichtet ist, eine einen Differentialschutzalgorithmus vorgebende Gerätesoftware auszuführen.

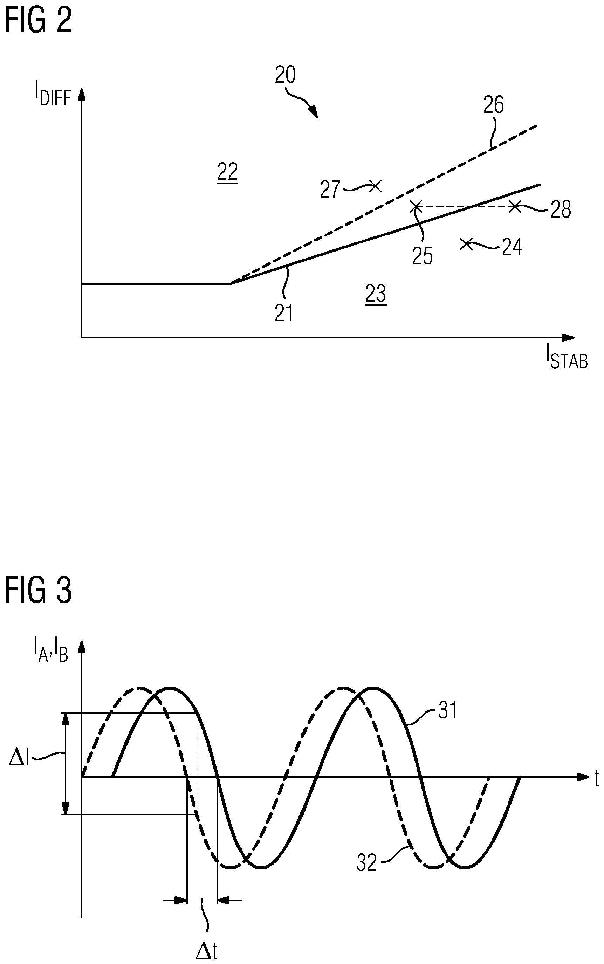

Die Differentialschutzgeräte 12a bzw. 12b sind durch eine in Figur 1 nur schematisch angedeutetes Kommunikationsnetz 16 miteinander verbunden, bei dem es sich z.B. um ein Ethernet-Kommunikationsnetz handeln kann. Allerdings kann auch jedes weitere Kommunikationsnetz beliebiger Art zur Verbindung der Differentialschutzgeräte 12a und 12b eingesetzt werden. Das Kommunikationsnetz 16 weist mehrere Netzknoten auf, die dazu eingerichtet sind, Nachrichten unterschiedlicher Priorität unterschiedlich bevorzugt zu versenden. Einzelheiten zu einem Ausführungsbeispiel des Kommunikationsnetzes 16 werden im Zusammenhang mit Figur 3 an späterer Stelle erläutert. Über das Kommunikationsnetz 16 können dem jeweils anderen Differentialschutzgerät 12a bzw. 12b die eigenen Strommesswerte zur Verfügung gestellt werden, das heißt, es können in jedem Differentialschutzgerät 12a bzw. 12b für jede Phase 13a, 13b, 13c des Schutzobjektes 11 jeweils Paare aus an beiden Enden 11a und 11b aufgenommenen Strommesswerten gebildet werden.

Anhand der in beiden Differentialschutzgeräten 12a und 12b verfügbaren Strommesswerte von beiden Enden 11a und 11b der Primärkomponente 11 kann in einem oder beiden Differentialschutzgeräten 12a bzw. 12b mittels der Differentialschutzeinrichtung eine Differenz der Beträge der Stromwerte pro Phase (bzw. eine vorzeichenrichtige Summe) als Differenzstromwert $I_{DIFF}$ gebildet und mit einem Schwellenwert verglichen werden.

Bei fehlerfreier Primärkomponente 11 ist der pro Phase in das Schutzobjekt 11 eintretende Strom gleich dem aus dem Schutzobjekt 11 austretenden Strom, so dass die Differenz der Beträge der Stromwerte (bzw. deren vorzeichenrichtige Summe) den Wert Null annehmen müsste. In der Realität nimmt der Differenzstromwert auch im fehlerfreien Falle allerdings quasi nie dauerhaft exakt den Wert Null an, sondern liegt stattdessen unterhalb eines vorgegebenen Schwellenwertes. Der beschriebene Effekt wird beispielsweise durch Wandlerungenauigkeiten, Messfehler sowie ungenaue Zeitsynchronisation der Differentialschutzgeräte 12a, 12b verursacht. Daneben spielen bei der Verwendung von nicht deterministischen Kommunikationsnetzen zur Übertragung der Strommesswerte und Übertragungszeitunterschiede ("Jitter") bei der Übertragung der Strommesswerte zum jeweils anderen Differentialschutzgerät 12a, 12b eine bedeutende Rolle. Diese Übertragungszeitunterschiede sind nicht konstant, sondern können für jede übertragene einen Strommesswert enthaltende Nachricht variieren.

Der Schwellenwert kann als einzelner Parameter festgelegt sein. Es kann jedoch auch vorgesehen sein, eine Schwellenwertüberschreitung durch Auswertung der Lage eines Messwertpaares aus dem Differenzstromwert $I_{DIFF}$ und einem zugehörigen Stabilisierungswert $I_{STAB}$ in einem Auslösediagramm zu prüfen.

Hierzu werden aus zusammengehörenden, d.h. gleichzeitig erfassten, Strommesswerten Differenzstromwerte $I_{DIFF}$ und zugehörige Stabilisierungswerte $I_{STAB}$ gebildet und die Lage des aus einem Differenzstromwert und einem Stabilisierungswert bestehenden Messwertpaares in dem Auslösediagramm geprüft. Liegt das Messwertpaar innerhalb eines Auslösebereichs, wird auf einen Fehler hinschlicht der überwachten Primärkomponente geschlossen und das Fehlersignal erzeugt.

Überschreitet für eine bestimmte Phase der Differenzstromwert den vorgegebenen Schwellenwert, so weist dies auf einen Fehler hinsichtlich der betreffenden Phase der Primärkomponente 11 hin, bei dem es sich beispielsweise um einen Erdschluss oder einen zwei- oder mehrpoligen Kurzschluss, d.h. einen Kurzschluss zwischen zwei oder mehr Phasen der Primärkomponente, handeln kann. Für diejenige Phase, bei der der Fehler erkannt worden ist, geben die Differentialschutzgeräte 12a und 12b über Steuerleitungen 17a, 17b ein entsprechendes Auslösesignal an phasenselektiv schaltbare Leistungsschalter 18 bzw. 19 ab, wodurch der entsprechende phasenbezogene Leistungsschalter 18a, 18b, 18c bzw. 19a, 19b, 19c zum Öffnen seiner Schaltkontakte veranlasst wird und die von dem Fehler betroffene Phase 13a, 13b, 13c vom restlichen Energieversorgungsnetz abtrennt.

Liegt beispielsweise auf der Phase 13b ein Erdschluss vor, so erkennen die Differentialschutzgeräte 12a bzw. 12b dies anhand eines den jeweiligen Schwellenwert übersteigenden Differenzstromwertes und geben Auslösesignale an die phasenbezogenen Leistungsschalter 18b bzw. 19b ab, um die Phase 13b der Primärkomponente 11 von dem Energieversorgungsnetz abzutrennen.

Um zusätzlich auch die Anteile der durch die variable Übertragungsdauer der einen Strommesswert enthaltenden Nachricht bei ihrer Übermittlung über das Kommunikationsnetz 16 effektiv zu berücksichtigen, wird der Schwellenwert zusätzlich in Abhängigkeit von einer die maximal mögliche Übertragungsdauer angebenden Jitter-Kenngröße ermittelt. Besteht eine hohe Unsicherheit bezüglich der Übertragungsdauer, d.h., die Übertragungsdauer kann für jede Nachricht einen beliebigen, nicht vorherbestimmbaren Wert innerhalb eines vergleichsweise großen Zeitbereiches annehmen, so muss der Schwellenwert derart bemessen sein, dass die Fehlererkennung entsprechend unempfindlicher durchgeführt wird, um unnötige Fehlauslösungen zu vermeiden. Kann die durch die Jitter-Kenngröße angegebene maximale Übertragungszeit hingegen auf einen vergleichsweise kleinen Bereich eingegrenzt werden, so kann eine entsprechend höhere Empfindlichkeit verwendet werden.

Bei Verwendung eines einzelnen Wertes als Schwellenwert kann die Abhängigkeit vergleichsweise einfach realisiert werden. Üblicherweise wird zur Fehlererkennung beim Differentialschutz jedoch die oben bereits erwähnte Auslösebereichsprüfung durchgeführt. Die Einstellung des Schwellenwertes für den letztgenannten Fall wird nachfolgend mit Bezugnahme auf Figur 2 näher erläutert.

Figur 2 zeigt hierzu ein vereinfacht dargestelltes Auslösediagramm 20, in dem Messwertpaare bestehend aus Differenzstromwerten $I_{DIFF}$ jeweils zugehörigen Stabilisierungswerten $I_{STAB}$ eingetragen werden können. Außerdem enthält das Auslösediagramm 20 eine Kennlinie 21, deren Verlauf einen Auslösebereich 22 von einem Normalbereich 23 abgrenzt.

Die Messwertpaare werden mittels der Differentialschutzeinrichtung des jeweiligen Differentialschutzgerätes (12a, 12b) ermittelt, wobei für das Ausführungsbeispiel in Figur 1 der Differenzstromwert $I_{DIFF}$ für jede Phase gemäß folgender Gleichung berechnet wird:

$$I_{DIFF} = |I_A + I_B|.$$

Dabei steht $I_A$ für den Strommesswert einer bestimmten Phase an der ersten Messstelle 11a und $I_B$ für den Strommesswert derselben Phase an der zweiten Messstelle 11b. Für mehr als zwei Messstellen ist die obige Gleichung um entsprechende Terme zu erweitern.

Der Stabilisierungswert $I_{STAB}$ wird in Abhängigkeit von der Art der Primärkomponente bestimmt. Für den Fall, dass es sich bei der Primärkomponente 11 in Figur 1 um eine elektrische Leitung handelt, wird für dieses Ausführungsbeispiel der Stabilisierungswert $I_{STAB}$ für jede Phase gemäß folgender Gleichung berechnet:

$$I_{STAB} = |I_A| + |I_B|.$$

Anhand der Lage eines Messwertpaares in dem Auslösediagramm 20 wird von der Differentialschutzeinrichtung eine Entscheidung darüber getroffen, ob ein Fehler auf der Primärkomponente vorliegt oder nicht. Beispielsweise liegt ein Messwertpaar 24 innerhalb des Normalbereiches 23 und deutet damit auf einen fehlerfreien Betriebszustand hin, während ein Messwertpaar 25 oberhalb der Kennlinie 21 im Auslösebereich 22 liegt und auf einen Fehler bezüglich der Primärkomponente hindeutet.

Für die Ermittlung des Differenzstromwertes $I_{DIFF}$ und des Stabilisierungswertes $I_{STAB}$ ist die Differentialschutzeinrichtung darauf angewiesen, jeweils zusammengehörige Strommesswerte $I_A$ und $I_B$ zu verwenden, d.h. solche Strommesswerte, die zu demselben Zeitpunkt aufgenommen worden sind. Aufgrund variabler Übertragungsdauern der die Strommesswerte enthaltenden Nachrichten in dem Kommunikationsnetz 16 kann es jedoch vorkommen, dass die Erfassungszeitpunkte der herangezogenen Strommesswerte $I_A$ und $I_B$ nicht exakt übereinstimmen und daraus ein Fehler bei der Bestimmung der Größen $I_{DIFF}$ und $I_{STAB}$ resultiert. Daher kann in Abhängigkeit der die maximale Übertragungsdauer angebenden Jitter-Kenngröße der verwendete Schwellenwert angepasst werden. Dies kann bei Verwendung eines Auslösediagramms beispielsweise dadurch erfolgen, dass der Verlauf der Kennlinie 21 entsprechend angepasst wird. Dies ist in Figur 2 durch eine zweite Kennlinie 26 angedeutet, die im Vergleich zur Kennlinie 21 steiler verläuft. Hierdurch wird der Auslösebereich 22 verkleinert und die Fehlererkennung entsprechend unempfindlicher. Die Kennlinie sollte daher einen umso steileren Verlauf annehmen, desto größer die Jitter-Kenngröße (und damit die maximale Übertragungsdauer) ist.

Im Beispiel der Figur 2 würde nach Anpassung der Kennlinie 21 auf den Verlauf der Kennlinie 26 das Messwertpaar 25 nicht mehr innerhalb des Auslösebereiches 22 liegen, erst ein Messwertpaar 27 mit im Vergleich noch höherem Differenzstromanteil läge erneut im Auslösebereich.

Eine andere Möglichkeit zur Anpassung des Schwellenwertes bei Verwendung der Auslösebereichsprüfung besteht darin, den Stabilisierungswertanteil des Messwertpaares zu beeinflussen. Hierfür kann die obige Gleichung zur Ermittlung des Stabilisierungswertes $I_{STAB}$ wie folgt modifiziert werden:

$$I_{STAB} = K \, (|I_A| + |I_B|).$$

Der hinzugekommene Faktor K wird in Abhängigkeit von der Jitter-Kenngröße ermittelt und wirkt sich entsprechend auf den Stabilisierungswert aus. Mit steigendem Faktor K wird dabei die Fehlererkennung entsprechend unempfindlicher eingestellt. Dies wird in Figur 2 beispielhaft anhand des Messwertpaares 25 gezeigt: Wird in diesem Fall der Stabilisierungswert durch einen Faktor K > 1 beeinflusst, so verschiebt sich die Lage des Messwertpaares 25 bei gleichbleibendem $I_{DIFF}$ entlang der gestrichelten Linie bis zur neuen Lage des Messwertpaares 28.

Somit kann festgehalten werden, dass zur Anpassung des Schwellenwertes bei Verwendung einer Auslösebereichsprüfung entweder der Verlauf der Kennlinie im Auslösediagramm oder die Art der Berechnung des Stabilitätswertes angepasst werden kann.

Anhand von Figur 3 soll nachfolgend kurz erläutert werden, wie bei Kenntnis der Jitter-Kenngröße der Schwellenwert angepasst werden kann. Dazu zeigt Figur 3 ein Diagramm mit einem ersten Verlauf einer durch aufeinander folgende Strommesswerte $I_A$ der ersten Messstelle 11a beschriebenen Kurve 31 und einem zweiten Verlauf einer durch aufeinander folgende Strommesswerte $I_B$ der zweiten Messstelle 11b beschriebenen Kurve 32. Bei der Ermittlung der Anpassung des Schwellenwertes kann insbesondere folgende Überlegung zugrunde gelegt werden: Idealerweise liegen die beiden Kurven 31 und 32 direkt übereinander, sofern ihre Verläufe zeitlich exakt aneinander angeglichen sind. Durch Differenzbildung ergäbe sich jeweils der Wert Null.

Für die nachfolgende Erklärung sei angenommen, dass der Differenzstromwert $I_{DIFF}$ und der Stabilisierungswert $I_{STAB}$ mittels der in das Differentialschutzgerät 12b integrierten Differentialschutzeinrichtung bestimmt werden. Damit muss der jeweils benötigte Strommesswert $I_A$ über das Kommunikationsnetz 16 an das Differentialschutzgerät 12b übertragen werden. Durch die Zeitverzögerung bei der Übertragung der den Strommesswert enthaltenden Nachricht $I_A$ verschiebt sich die Kurve 31 entlang der Zeitachse gegen die Kurve 32, so dass die Kurven 31 und 32 nicht mehr exakt übereinander liegen und durch die maximale Übertragungsdauer eine Abweichung $\Delta t$ entsteht, die allein auf die Übertragungsdauer der den jeweiligen Strommesswert $I_A$ enthaltenden Nachricht zurückzuführen ist. Eine ermittelte maximale Übertragungsdauer kann somit direkt in eine Verschiebung der Kurven gegeneinander umgesetzt werden. Hieraus ergibt sich in entsprechender Weise eine Abweichung $\Delta I$ der Werte entlang der Stromachse, wobei aufgrund des charakteristischen sinusförmigen Verlaufs der Kurven diese Stromabweichung nicht an allen Stellen gleich ist. Als Worst-Case-Abschätzung ist beispielsweise die größtmögliche Abweichung $\Delta I$ für die Ermittlung der Schwellenwertanpassung heranzuziehen, ggf. ist auch eine Verwendung einer mittleren Abweichung $\Delta I$ möglich. Zusammengefasst kann somit der durch die zeitliche Verschiebung der Kurven entstehende Ablesefehler bezüglich des Strommesswertes direkt ermittelt werden kann. Der Schwellenwert sollte derart gewählt werden, dass die durch die zeitliche Verschiebung der Kurven entstehende Abweichung $\Delta I$ der Stromwerte hinsichtlich der Fehlererkennung kompensiert wird.

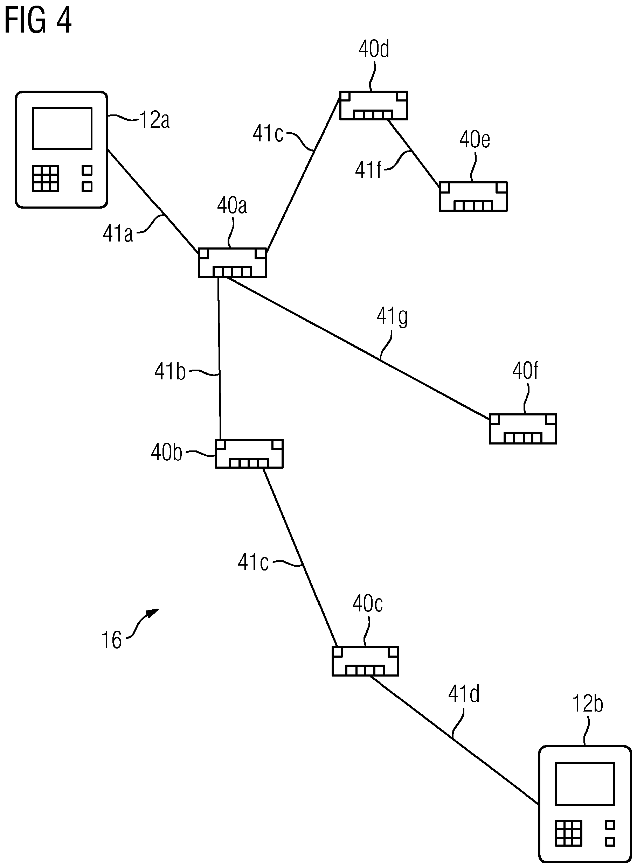

Figur 4 zeigt schließlich ein Ausführungsbeispiel einer Vorgehensweise zur Ermittlung der Jitter-Kenngröße. Hierzu sind in Figur 4 die beiden Differentialschutzgeräte 12a und 12b sowie das Kommunikationsnetz 16 dargestellt, wobei die Darstellung des Kommunikationsnetzes 16 detaillierter ausgeführt ist als in Figur 1. Das Kommunikationsnetz 16 umfasst mehrere Netzknoten 40a-f, bei denen es sich beispielsweise um Switche, Router, Hubs oder Netzwerkbrücken (Bridges) handeln kann. Der besseren Übersichtlichkeit halber sind außerdem lediglich Verbindungen 41a-g zwischen den Kommunikationsknoten 40a-f des Kommunikationsnetzes 16 dargestellt, weitere Verbindungen, z.B. zu weiteren Endgeräten, sind in Figur 4 fortgelassen worden.

Die Netzknoten 40a-f sind dazu eingerichtet, Nachrichten unterschiedlicher Prioritäten unterschiedlich zu behandeln, wobei Nachrichten mit höherer Priorität im Vergleich zu solchen mit niedriger Priorität bevorzugt versendet werden. Eine bekannte Methode zur Implementierung eines solchen prioritätsabhängigen Netzwerkverkehrs ist beispielsweise "Quality-of-Service" (QoS). Dabei ist zwar üblicherweise vorgesehen, dass Nachrichten hoher Priorität gegenüber solchen mit niedrigerer Priorität vorrangig versendet werden, ein Unterbrechen eines bereits begonnenen Sendevorgangs einer Nachricht mit niedrigerer Priorität zu Gunsten einer Nachricht mit höherer Priorität ist oftmals jedoch nicht implementiert. Daher kann es auch bei hochprioren Nachrichten zu "Wartezeiten" bzw. Aufenthaltsdauern an den einzelnen Netzknoten kommen, die zu den oben bereits beschriebenen unterschiedlich langen Übertragungsdauern führen.

Zur Ermittlung der die maximale Übertragungsdauer angebenden Jitter-Kenngröße wird nun in einem ersten Schritt zunächst der Pfad ermittelt, den die Nachricht zwischen den Differentialschutzgeräten 12a und 12b in dem Kommunikationsnetz nehmen muss. Sind mehrere Pfade möglich, so müssen all diese ermittelt werden. In häufig verwendeten Ethernet-Netzwerken ist jedoch per Definition oft nur eine Verbindung zwischen zwei Endgeräten zugelassen, so dass auch nur ein zu ermittelnder Pfad besteht. Die Ermittlung des Pfades kann entsprechend einer Optimierungsmethode zur Lösung des sogenannten "Traveling-Salesman-Problems" ("Problem des Handlungsreisenden") durchgeführt werden. Das Problem als solches, seine bisherigen Anwendungen und Lösungsalgorithmen werden beispielsweise in "The Traveling Salesman Problem: A Computational Study" aus der Reihe "Princeton Series in Applied Mathematics", David L. Applegate, Robert E. Bixby und William J. Cook, 15. Januar 2007, beschrieben. Mögliche Optimierungsmethoden sind z.B. Methoden der ganzzahligen linearen Optimierung.

Liegt der Pfad der Nachricht fest, so sind hiermit auch die Netzknoten identifiziert, die die Nachricht entlang dieses Pfades passieren muss. Für jeden dieser identifizierten Netzknoten kann nun eine individuelle maximale Aufenthaltsdauer der Nachricht ermittelt werden, die sich beispielsweise aus der maximal zu übertragenden Nachrichtengröße sowie der Übertragungsgeschwindigkeit einer vor der den Strommesswert enthaltenden Nachricht noch zu versendenden anderen Nachricht bei ihrem Versenden durch den fraglichen Netzknoten ergibt. Aus der Summe aller maximalen Aufenthaltsdauern der Nachricht an den einzelnen identifizierten Netzknoten ergibt sich anschließend die maximale Übertragungsdauer und somit die Jitter-Kenngröße. Damit wird quasi als Worst-Case-Szenario angenommen, dass die Nachricht durch andere noch zu versendende Nachrichten an jedem Netzknoten für die maximale Aufenthaltsdauer aufgehalten wird.

Im Folgenden soll die Ermittlung der Jitter-Kenngröße anhand eines Beispiels erläutert werden. Die Pfadermittlung ergibt, dass eine Nachricht vom Differentialschutzgerät 12a an das Differentialschutzgerät 12b entlang des folgenden Pfades übertragen wird:

Differentialschutzgerät 12a --> Verbindung 41a --> Netzknoten 40a --> Verbindung 41b --> Netzknoten 40b --> Verbindung 41c --> Netzknoten 40c --> Verbindung 41d --> Differentialschutzgerät 12b.

Bei Kenntnis dieses Pfades können die Netzknoten 40a-c als diejenigen identifiziert werden, an denen die Nachricht aufgehalten werden kann. Die Übertragungsgeschwindigkeit über die Verbindungen 41a und 41d betrage zudem 100MBit/s, diejenige über die Verbindungen 41b und 41c 1000MBit/s. Die maximale Nachrichtengröße bei Ethernet beträgt üblicherweise 1518 Byte.

Für den Netzknoten 40a ergibt sich somit eine maximale Aufenthaltsdauer der Nachricht aus der Annahme, dass vor ihrem Versenden noch eine komplette andere Nachricht, deren Sendevorgang unmittelbar begonnen hat, versendet werden muss: Das Versenden von 1518 Byte bei 1000 MBit/s benötigt eine Zeit von 12,144$\mu$s. Diese Zeit entspricht der maximalen Aufenthaltsdauer der Nachricht an Netzknoten 40a. Für Netzknoten 40b ergibt sich aufgrund der identischen maximalen Nachrichtengröße und Übertragungsgeschwindigkeit ebenfalls eine maximale Aufenthalts-dauer von 12,144$\mu$s.

Für den Netzknoten 40c ergibt sich aufgrund der unterschiedlichen Übertragungsgeschwindigkeit von nur 100MBit/s ein anderer Wert für die maximale Aufenthaltsdauer: Das Versenden von 1518 Byte bei 100 MBit/s benötigt eine Zeit von 121,44$\mu$s. Diese Zeit entspricht der maximalen Aufenthaltsdauer der Nachricht an Netzknoten 40c.

Damit ergibt sich als Summe der maximalen Aufenthaltsdauern entlang des kompletten Pfades der Nachricht eine maximale Übertragungsdauer von

$$12{,}144\mu s + 12{,}144\mu s + 121{,}44\mu s = 145{,}728\mu s.$$

Der Wert von 145,728$\mu$s entspricht somit der Jitter-Kenngröße für die Nachricht entlang des identifizierten Pfades.

Die Übertragung der Nachricht benötigt zunächst grundsätzlich eine feste Zeitdauer, die sich im Wesentlichen aus der Länge der Verbindungsleitungen und der Übertragungsgeschwindigkeit ergibt. Diese Zeitdauer kann im Vorhinein als Mindestübertragungsdauer bestimmt werden und bleibt nachfolgend konstant. Der Wert von 145,728$\mu$s für die Jitter-Kenngröße bedeutet nun, dass die Übermittlung der Nachricht aufgrund von noch anstehenden anderen Nachrichten in den Netzknoten um einen beliebigen Wert zwischen Null und 145,728$\mu$s länger als die Mindestübertragungsdauer sein kann. Die hieraus entstehende Unsicherheit muss durch die entsprechende Schwellenwertanpassung (vgl. z.B. Figur 3) kompensiert werden.

Die Ermittlung der Jitter-Kenngröße kann beispielsweise einmalig, insbesondere bei der Inbetriebnahme des Differentialschutzsystems, erfolgen. Der Schwellenwert wird erfindungsgemäß automatisch in der Differentialschutzeinrichtung eingestellt . Ggf. kann das Verfahren bei signifikanten Änderungen des Kommunikationsnetzes erneut durchgeführt werden.

Es kann jedoch auch vorgesehen sein, den Prozess regelmäßig oder ereignisgesteuert in wiederholter Weise durchzuführen, so dass der Schwellenwert auch kleinen Veränderungen der Jitter-Kenngröße kontinuierlich nachgeführt werden kann. Bei einer hohen Wiederholungsrate kann der Schwellenwert sogar quasi in Echtzeit dynamisch an die Jitter-Kenngröße angepasst werden.

Das beschriebene Verfahren besitzt insbesondere den Vorteil, dass das Differentialschutzsystem insgesamt empfindlicher eingestellt werden kann als wenn der Einfluss der variablen Übertragungsdauer lediglich abgeschätzt werden würde - und damit üblicherweise zu groß angesetzt werden würde. Der Schwellenwert kann an die tatsächlich vorliegende Netztopologie angepasst werden und bei regelmäßiger Überprüfung kontinuierlich an Änderungen angepasst werden.

**Patentansprüche**

1. Differentialschutzverfahren zum Erzeugen eines Fehlersignals, das einen Fehler hinsichtlich einer Primärkomponente (11) eines elektrischen Energieversorgungsnetzes angibt, bei dem

   - mittels Messeinrichtungen an mindestens zwei unterschiedlichen Messstellen (IIa-b) der Primärkomponente (11) des elektrischen Energieversorgungsnetzes jeweils Strommesswerte erfasst werden,
   - die Strommesswerte an eine Differentialschutzeinrichtung übermittelt werden, die mit zueinander gehörenden Strommesswerten aller Messeinrichtungen durch vorzeichenrichtige Addition einen Differenzstromwert bildet, und
   - mittels der Differentialschutzeinrichtung das Fehlersignal erzeugt wird, wenn der Differenzstromwert einen vorgegebenen Schwellenwert überschreitet,
   **dadurch gekennzeichnet, dass**
   - der Strommesswert zumindest einer Messeinrichtung über ein Kommunikationsnetz (16) an die Differentialschutzeinrichtung übertragen wird, wobei das Kommunikationsnetz (16) Netzwerkknoten (40a-f) umfasst, die dazu eingerichtet sind, Nachrichten hoher Priorität bevorzugt gegenüber Nachrichten niedriger Priorität zu versenden, und wobei der Strommesswert als Nachricht hoher Priorität übertragen wird;
   - eine Jitter-Kenngröße ermittelt wird, die eine maximal mögliche Übertragungszeit der den Strommesswert enthaltenden Nachricht angibt; und
   - die Differentialschutzeinrichtung den Wert des Schwellenwertes in Abhängigkeit von der Jitter-Kenngröße ableitet.

2. Differentialschutzverfahren nach Anspruch 1,
   **dadurch gekennzeichnet, dass**

   - zur Überprüfung, ob der Differenzstromwert den vorgegebenen Schwellenwert überschreitet, aus den Strommesswerten der einzelnen Messstellen (IIa-b) auch Stabilisierungswerte gebildet werden und im Rahmen einer Auslösebereichsprüfung überprüft wird, ob ein unter Heranziehung eines Differenzstromwertes und eines jeweils zugehörigen Stabilisierungswertes gebildetes Messwertpaar in einem vorgegebenen Auslösebereich (22) liegt; und
   - eine Überschreitung des Schwellenwertes erkannt wird, wenn das Messwertpaar innerhalb des Auslösebereichs (22) liegt.

3. Differentialschutzverfahren nach Anspruch 1 oder 2,
   **dadurch gekennzeichnet, dass**

   - der Wert des Schwellenwertes mit steigendem Wert der Jitter-Kenngröße zunimmt.

4. Differentialschutzverfahren nach einem der vorangehenden Ansprüche,
   **dadurch gekennzeichnet, dass**

   - die Ermittlung der Jitter-Kenngröße wiederholt durchgeführt wird; und
   - die Festlegung des Schwellenwertes dynamisch in Abhängigkeit des jeweils ermittelten Wertes der Jitter-Kenngröße erfolgt.

5. Differentialschutzverfahren nach einem der vorangehenden Ansprüche,
   **dadurch gekennzeichnet, dass**

   - zur Ermittlung der Jitter-Kenngröße diejenigen Netzwerkknoten (40a-f) ermittelt werden, die entlang des Pfades der den Strommesswert enthaltenden Nachricht zwischen der Messeinrichtung und der Differentialschutzeinrichtung liegen;
   - eine maximale Aufenthaltsdauer der Nachricht in dem jeweiligen Netzwerkknoten (40a-f) ermittelt wird; und
   - die maximale Übertragungszeit der Nachricht als Summe der maximalen Aufenthaltsdauern der Nachricht an allen ermittelten Netzwerkknoten (40a-f) bestimmt wird.

6. Differentialschutzverfahren nach Anspruch 5,
   **dadurch gekennzeichnet, dass**

- die maximale Aufenthaltsdauer einer Nachricht an einem Netzwerkknoten (40a-f) aus der größtmöglichen Nachrichtengröße einer von dem Netzwerkknoten (40a-f) zu versendenden Nachricht und der Übertragungsgeschwindigkeit, mit der eine solche Nachricht von dem Netzwerkknoten (40a-f) versendet wird, ermittelt wird.

**7.** Differentialschutzverfahren nach Anspruch 5 oder 6,
**dadurch gekennzeichnet, dass**

- zur Ermittlung derjenigen Netzwerkknoten (40a-f), die entlang des Pfades der den Strommesswert enthaltenden Nachricht zwischen der Messeinrichtung und der Differentialschutzeinrichtung liegen, ein Routen-Optimierungsalgorithmus durchgeführt wird, der zur Lösung eines Traveling-Salesman-Problems geeignet ist.

**8.** Differentialschutzeinrichtung zum Erzeugen eines Fehlersignals, das einen Fehler hinsichtlich einer Primärkomponente (11) eines elektrischen Energieversorgungsnetzes angibt, wobei die Differentialschutzeinrichtung dazu eingerichtet ist, mittels Messeinrichtungen an mindestens zwei unterschiedlichen Messstellen (lla-b) der Primärkomponente (11) des elektrischen Energieversorgungsnetzes jeweils erfasste Strommesswerte zu empfangen, mit zueinander gehörenden Strommesswerten aller Messeinrichtungen durch vorzeichenrichtige Addition einen Differenzstromwert zu bilden und das Fehlersignal zu erzeugen, wenn der Differenzstromwert einen vorgegebenen Schwellenwert überschreitet,
**dadurch gekennzeichnet, dass**

- der Strommesswert zumindest einer Messeinrichtung über ein Kommunikationsnetz (16) an die Differentialschutzeinrichtung übertragen wird, wobei das Kommunikationsnetz (16) Netzwerkknoten (40a-f) umfasst, die dazu eingerichtet sind, Nachrichten hoher Priorität bevorzugt gegenüber Nachrichten niedriger Priorität zu versenden, und wobei der Strommesswert als Nachricht hoher Priorität übertragen wird;
- eine Jitter-Kenngröße ermittelt wird, die eine maximal mögliche Übertragungszeit der den Strommesswert enthaltenden Nachricht angibt; und
- die Differentialschutzeinrichtung dazu ausgebildet ist, den Wert des Schwellenwertes in Abhängigkeit von der Jitter-Kenngröße abzuleiten.

## Claims

**1.** Differential protection method for generating an error signal which specifies an error with respect to a primary component (11) of an electric power supply network, in which

- current measured values are detected in each case by means of measuring devices at at least two different measuring points (lla-b) of the primary component (11) of the electric power supply network,
- the current measured values are transferred to a differential protection device, which forms a differential current value with current measured values of all measuring devices which are associated with one another by means of correctly adding a leading sign, and
- the error signal is generated by means of the differential protection device, if the differential current value exceeds a predetermined threshold value,
**characterised in that**
- the current measured value of at least one measuring device is transmitted via a communication network (16) to the differential protection device, wherein the communication network (16) comprises network nodes (40a-f) which are designed to send high priority messages preferably compared with low priority messages, and wherein the current measured value is transmitted as a high priority message;
- a jitter parameter is determined which specifies a maximum possible transmission time of the message containing the current measured value; and
- the differential protection device derives the value of the threshold value as a function of the jitter parameter.

**2.** Differential protection method according to claim 1, **characterised in that**

- in order to check whether the differential current value exceeds the predetermined threshold value, stabilisation values are also formed from the current measured values of the individual measuring points (lla-b) and a check is carried out within the scope of a trigger range check to determine whether a measured value pair formed using a differential current value and a respectively associated stabilisation value is present in a predetermined trigger range (22); and

- an exceeding of the threshold value is identified if the measured value pair lies within the trigger range (22).

3. Differential protection method according to claim 1 or 2,
   **characterised in that**

   - the value of the threshold value increases with an increasing value of the jitter parameter.

4. Differential protection method according to one of the preceding claims,
   **characterised in that**

   - the determination of the jitter parameter is carried out repeatedly, and
   - the definition of the threshold value takes place dynamically as a function of the respectively determined value of the jitter parameter.

5. Differential protection method according to one of the preceding claims,
   **characterised in that**

   - in order to determine the jitter parameter, those network nodes (40a-f) are determined, which lie along the path of the message containing the current measured value between the measuring device and the differential protection device;
   - a maximum length of stay of the message is determined in the respective network node (40a-f); and
   - the maximum transmission time of the message is determined as the sum of the maximum length of stay of the message at all determined network nodes (40a-f).

6. Differential protection method according to claim 5,
   **characterised in that**

   - the maximum length of stay of a message at a network node (40a-f) is determined from the largest possible message size of a message to be sent from the network node (40a-f) and the transmission speed with which one such message is sent from the network node (40a-f).

7. Differential protection method according to claim 5 or 6,
   **characterised in that**

   - in order to determine those network nodes (40a-f) which lie along the path of the message containing the current measured value between the measuring device and the differential protection device, a route optimisation algorithm is carried out, which is suited to resolving a travelling salesman problem.

8. Differential protection device for generating an error signal, which specifies an error in respect of a primary component (11) of an electric power supply network, wherein the differential protection device is designed to receive in each case detected current measured values by means of measuring devices at at least two different measuring points (lla-b) of the primary component (11) of the electric energy supply network, to form a differential current value with current measured values of all measuring devices which belong to one another by means of correctly adding a leading sign and to generate the error signal if the differential current value exceeds a predetermined threshold value,
   **characterised in that**

   - the current measured value of at least one measuring device is transmitted via a communication network (16) to the differential protection device, wherein the communication network (16) comprises network nodes (40a-f), which are designed to send high priority messages by comparison with lower priority messages, and wherein the current measured value is transmitted as a high priority message;
   - a jitter parameter is determined, which specifies a maximum possible transmission time of the message containing the current measured value; and
   - the differential protection device is embodied to derive the value of the threshold value as a function of the jitter parameter.

**Revendications**

1. Procédé de protection différentiel pour la production d'un signal de défaillance, qui indique une défaillance en ce qui concerne un composant (11) primaire d'un réseau d'alimentation en énergie électrique, dans lequel

   - au moyen de dispositifs de mesure, on relève en au moins deux points (IIa-b) de mesure différents du composant (11) primaire du réseau d'alimentation en énergie électrique respectivement des valeurs de mesure du courant,
   - on transmet les valeurs de mesure du courant à un dispositif de protection différentiel, qui forme avec des valeurs de mesure du courant se convenant les unes aux autres de tous les dispositifs de mesure, par addition correcte en signe, une valeur de courant de différence, et
   - au moyen du dispositif de protection différentiel, on produit le signal de défaillance, si la valeur de courant de différence dépasse une valeur de seuil donnée à l'avance,
   **caractérisé en ce que**
   - on transmet la valeur de mesure du courant d'au moins un dispositif de mesure au dispositif de protection différentiel par un réseau (16) de communication, dans lequel le réseau (16) de communication comprend des nœuds (40a-f) de réseau, qui sont conçus pour envoyer des messages de priorité plus grande par rapport à des messages de priorité plus petite et dans lequel on transmet la valeur de mesure de courant comme message de priorité plus grande ;
   - on détermine une grandeur caractéristique de gigue, qui indique un temps de transmission possible au maximum du message contenant la valeur de mesure de courant ; et
   - le dispositif de protection différentiel déduit la valeur de la valeur de seuil en fonction de la grandeur caractéristique de gigue.

2. Procédé de protection différentiel suivant la revendication 1,
   **caractérisé en ce que**

   - pour le contrôle du point de savoir si la valeur de courant de différence dépasse la valeur de seuil donnée, on forme à partir des valeurs de mesure de courant des divers points (IIa-b) de mesure également des valeurs de stabilisation et, dans le cadre d'un contrôle de plage de déclenchement, on contrôle si une paire de valeurs de mesure, formée en tirant parti d'une valeur de courant de différence et d'une valeur de stabilisation associée respectivement, se trouve dans une plage (22) de déclenchement donnée à l'avance ; et
   - on détecte un dépassement de la valeur de seuil si la paire de valeurs de mesure se trouve dans la plage (22) de déclenchement.

3. Procédé de protection différentiel suivant la revendication 1 ou 2,
   **caractérisé en ce que**

   - la valeur de la valeur du seuil augmente au fur et à mesure qu'augmente la valeur de la grandeur caractéristique de gigue.

4. Procédé de protection différentiel suivant l'une des revendications précédentes,
   **caractérisé en ce que**

   - on effectue la détermination de la grandeur caractéristique de gigue d'une manière répétée ; et
   - on effectue la fixation de la valeur de seuil dynamiquement en fonction de la valeur déterminée respectivement de la grandeur caractéristique de gigue.

5. Procédé de protection différentiel suivant l'une des revendications précédentes,
   **caractérisé en ce que**

   - pour la détermination de la grandeur caractéristique de gigue, on détermine les nœuds (40a-f) du réseau, qui, le long du trajet du message contenant la valeur de mesure de courant, se trouvent entre le dispositif de mesure et le dispositif de protection différentiel ;
   - on détermine une durée de séjour maximum du message dans le nœud (40a-f) respectif du réseau ; et
   - on détermine le temps de transmission maximum du message comme somme des durées de séjour maximum du message sur tous les nœuds (40a-f) du réseau déterminés.

6. Procédé de protection différentiel suivant la revendication 5,

**caractérisé en ce que**

- on détermine la durée de séjour maximum d'un message sur un nœud (40a-f) du réseau à partir de la dimension la plus grande possible d'un message à envoyer par le nœud (40a-f) du réseau et de la vitesse de transmission à laquelle un message de ce genre est envoyé par le nœud (40a-f) du réseau.

7. Procédé de protection différentiel suivant la revendication 5 ou 6,
**caractérisé en ce que**

- pour la détermination des nœuds (40a-f) du réseau, qui, le long du trajet du message contenant la valeur de mesure de courant, se trouvent entre le dispositif de mesure et le dispositif de protection différentiel, on effectue un algorithme d'optimisation de routage, qui convient à la résolution d'un traveling-salesman-problem.

8. Dispositif de protection différentiel pour la production d'un signal de défaillance, qui indique une défaillance en ce qui concerne un composant (11) primaire d'un réseau d'alimentation en énergie électrique, dans lequel le dispositif de protection différentiel est conçu pour recevoir, au moyen de dispositifs de mesure en au moins deux points (lla-b) de mesure différents du composant (11) primaire du réseau d'alimentation en énergie électrique, des valeurs de mesure du courant relevées respectivement, pour former avec des valeurs de mesure de courant se convenant les unes aux autres de tous les dispositifs de mesure par addition correcte en signes, une valeur de courant de différence et pour produire le signal de défaillance, si la valeur de courant de différence dépasse une valeur de seuil donnée à l'avance,
**caractérisé en ce que**

- la valeur de mesure de courant d'au moins un dispositif de mesure est transmise au dispositif de protection différentiel par un réseau (16) de communication, dans lequel le réseau (16) de communication comprend des nœuds (40a-f) de réseau, qui sont conçus pour envoyer des messages de priorité plus grande, de préférence à des messages de priorité plus petite, et dans lequel la valeur de mesure de courant est transmise comme message de priorité plus grande ;
- on détermine une grandeur caractéristique de gigue, qui indique un temps de transmission possible au maximum du message contenant la valeur de mesure de courant ; et
- le dispositif de protection différentiel est constitué pour déduire la valeur de la valeur de seuil en fonction de la grandeur caractéristique de gigue.

FIG 1

## FIG 2

## FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2339931 A1
- EP 1071961 B1

- US 2011063766 A1

**In der Beschreibung aufgeführte Nicht-Patentliteratur**

- **DAVID L. APPLEGATE ; ROBERT E. BIXBY ; WILLIAM J. COOK.** The Traveling Salesman Problem: A Computational Study. *Princeton Series in Applied Mathematics,* 15. Januar 2007